Europäisches Patentamt

European Patent Office

Office européen des brevets

(11) Publication number: **0 488 549 B1**

# EUROPEAN PATENT SPECIFICATION

(45) Date of publication of patent specification: **29.11.95**

(51) Int. Cl.⁶: **C10G 11/18**, B01J 8/18, B04C 3/00

(21) Application number: **91310467.5**

(22) Date of filing: **13.11.91**

(54) **Catalyst separation and stripper gas removal in FCC units.**

(30) Priority: **30.11.90 US 620114**

(43) Date of publication of application:
**03.06.92 Bulletin 92/23**

(45) Publication of the grant of the patent:
**29.11.95 Bulletin 95/48**

(84) Designated Contracting States:
**DE FR GB IT NL**

(56) References cited:
**US-A- 3 677 715**
**US-A- 4 737 346**

(73) Proprietor: **TEXACO DEVELOPMENT CORPO-RATION**
**2000 Westchester Avenue**
**White Plains,**
**New York 10650 (US)**

(72) Inventor: **Chan, Ting Yee**
**9618 Triola Lane**
**Houston, TX 77036 (US)**

(74) Representative: **Wood, Anthony Charles et al**
**Urquhart-Dykes & Lord**
**91 Wimpole Street**
**London W1M 8AH (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to an apparatus for rapidly separating catalyst from a cracked hydrocarbon gas in a fluidized catalytic cracking unit (FCCU). The invention is also an apparatus for withdrawing stripper gas from an FCCU reactor vessel.

The fluid catalytic cracking (FCC) process comprises mixing hot regenerated catalyst with a hydrocarbon feedstock in a transfer line riser reactor under catalytic cracking reaction conditions. As a result the feedstock is cracked to yield gasoline boiling range hydrocarbons as well as degradation products, i.e. coke, which deposit on the catalyst causing a reduction in catalytic activity. Hydrocarbon vapors and coked catalyst are passed from the top of the riser reactor directly to a separator vessel wherein catalyst is separated from hydrocarbons. In the FCC art, the separator vessel is termed a reactor vessel. The separated catalyst is passed to a stripper wherein it is contacted with a stripping gas to remove volatile hydrocarbons. Stripped catalyst is then passed to a separate regeneration vessel wherein coke is oxidized from the catalyst at a controlled rate. Catalyst having had a substantial portion of the coke removed is then passed to a vertically oriented regenerated catalyst standpipe to the riser reactor for cyclic reuse in the process.

The field of fluid catalytic cracking (FCC) has undergone significant development in catalyst technology. With the advent of high activity catalysts, particularly crystalline zeolite cracking catalysts, operating techniques have been developed to take advantage of the high catalyst activity, selectivity and feedstock sensitivity. The advantage made of these high activity catalysts has been to improve the product distribution from feedstocks.

The hydrocarbon conversion catalyst employed in an FCC process is preferably a high activity crystalline zeolite catalyst of a fluidizable particle size. The catalyst is transferred in suspended or dispersed phase with a hydrocarbon feed, upwardly through one or more riser conversion zones (FCC cracking zones), providing a hydrocarbon residence time in each conversion zone in the range of 0.5 to about 10 seconds, and usually less than about 8 seconds. High temperature riser hydrocarbon conversions, occurring at temperatures of at least 540°C or higher and at 0.5 to 4 seconds hydrocarbon catalyst residence time in the riser are desirable. The vaporous hydrocarbon product is then separated from the catalyst.

Rapid separation of catalyst from hydrocarbon product is particularly desirable to restrict hydrocarbon conversion time. During the hydrocarbon conversion, carbonaceous deposits accumulate on the catalyst particles and entraining hydrocarbon vapors. Entrained hydrocarbon contact with the catalyst continues after removal from the hydrocarbon conversion zone until it is separated from the catalyst. The separation is typically by means of a cyclone separator followed by stripping the catalyst with a stripping gas to remove volatizable hydrocarbon. Hydrocarbon conversion products and stripped hydrocarbon are combined and passed to a product fractionation zone. Stripped catalyst containing deactivating amounts of carbonaceous material, termed coke, is then passed to a catalyst regeneration zone.

Cyclone separators are typically used for separation of fluidized catalyst particles from the cracked hydrocarbon phase. In a typical cyclone separator, a suspension comprising a hydrocarbon vapor with entrained finely divided solid particle catalyst material is introduced tangentially into the cyclone separator barrel to impart a spiral or centrifugal motion to the suspension. This centrifugal motion causes the solid particles to be thrown to the wall of the cyclone separator where they flow downward under the force of gravity to a catalyst bed below. The separated vapor is removed through an axially attached conduit extending below the tangential inlet conduit upwardly through the top of the cyclone separator. A vapor recovery system operated at reduced pressure causes a pressure gradient in the cyclone separator, assisting in the withdrawal of vapor.

An object of the present invention is to provide an apparatus particularly suited for rapidly separating the catalyst hydrocarbon suspension. Another object is to take advantage of the pressure gradient between the cyclone outlet conduit and the reactor vessel to remove stripper gas from the reactor vessel. Another object of this invention is to provide a cyclone separator apparatus which withstands thermal expansions.

Perry's Chemical Engineers' Handbook, 4th ed., pp. 20-68 to 20-71 describes general design parameters for cyclone separators used for removing solid particles from vapors.

Kirk-Othmer Encyclopedia, 3rd ed., Vol. 1, pp. 667 to 672 describes general design parameters for cyclone separators used for separating solid particles from gases.

U. S. Patents 4,623,446 and 4,737,346 to J. H. Haddad et al. teach a closed coupled cyclone separator system in the reactor vessel of a fluid catalytic cracking apparatus. Means is provided for blending stripping gas with cracked hydrocarbon as it flows to a directly coupled riser cyclone separator. As shown in Fig. 7 and 8, the riser reactor conduit is modified to comprise an overlapping downstream portion 118 to provide an annulus between the upstream portion 117 and the downstream portion 118. The annulus is covered by a flat metal ring having orifices 125 in open communication with the reactor vessel, enabling stripping gas to pass into the downstream conduit 118. A riser cyclone dipleg is sized, as seen in Fig. 5, to admit at least a portion of stripping gas from the stripping zone to pass countercurrent to catalyst passing downwardly through the dipleg.

U.S. Patent 4,502,947 to Haddad et al. discloses a closed cyclone fluid catalytic cracking catalyst separation method and apparatus. In the closed cyclone, hydrocarbon product and catalyst are passed directly into a cyclone separator from a riser without passing into the atmosphere of the reactor vessel. Avoiding the atmosphere of the reactor vessel reduces the time for overcracking due to high temperature thermal cracking and overly long contact with catalyst.

The above-mentioned US-A-4737346 may be taken as representative of the prior art, and describes a riser cyclone separator for connection to the outlet of a riser for the fluid catalytic cracking of a hydrocarbon feed, said separator being adapted for association with a reactor vessel containing a catalyst stripping zone, said separator serving in use to separate cracked hydrocarbon from used catalyst.

In accordance with the present invention, said separator is characterized by:

a cyclone barrel having an inlet duct for tangential entry of the cracked hydrocarbon and used catalyst from the riser outlet, an upper outlet tube for the cracked hydrocarbon and a lower outlet for directing the used catalyst to the stripping zone within the reactor vessel, said cyclone having an annular inlet port at its upper end, surrounding said outlet tube, to allow stripper gas within the reactor vessel to be drawn into said cyclone separator.

The above-mentioned US-A-4737347 also describes a process for the fluid catalytic cracking of a hydrocarbon feed, the process utilizing a cyclone separator.

The present invention is further characterized by a process as set out in Claim 5.

Fig. 1 is a diagrammatic arrangement of a fluid catalytic cracking apparatus comprising a riser reactor, reactor vessel, catalyst stripper and a regenerator.

Fig. 2 is a proportional side view of a riser cyclone separator.

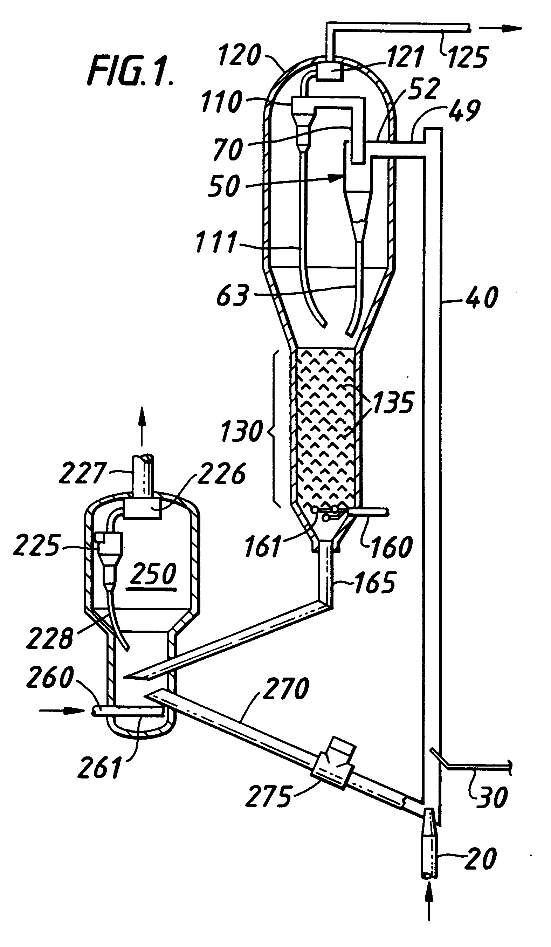

Reference is made to Fig. 1 which is representative of an apparatus for contacting a hydrocarbon feedstock with finely divided fluidized catalyst in riser reactor 40 at catalytic cracking conditions. A clean, freshly regenerated catalyst is delivered from regenerated catalyst standpipe 270 into the lower portion of riser reactor 40. The regenerated catalyst has a carbon content less than about 0.1 wt% and an ASTM microactivity of 60 to 70. As the catalyst enter the riser, its temperature decreases from 760°C to 700°C by the addition of a fluidization medium delivered by line 20. The fluidization medium may be steam, nitrogen or low molecular weight hydrocarbons such as methane, ethane, ethylene or fuel gas. The amount of fluidization medium must be sufficient to fluidize the fluid zeolite catalyst in the base of riser 40 above the minimum fluidization velocity to move the catalyst toward the injection point of the hydrocarbon oil. A feedstock, such as vacuum gas oil (VGO) having a boiling range of about 200°C to 540°C is heated and delivered to riser reactor 40 through conduit 30. The VGO enters the riser by way of an injection nozzle (not shown) which may be a single nozzle or an arrangement of more than one nozzle which mixes oil and catalyst quickly and completely after injection. The amount of catalyst circulated must be enough to completely vaporize the oil and be sufficient to crack the feedstock to a range of products including gas, low boiling liquids and fuel boiling range liquids such as gasoline and light cycle gas oil. The mixture of products and unconverted gas oil vapor have sufficient velocity to transport the fluid catalyst upwardly through the riser 40.

The mixture of catalyst and oil vapors proceed upwardly in riser 40. The riser conversion zone comprises the internal volume of the riser from the lower injection point to riser cyclone 50 including transitional member 49 and inlet conduit 52. Riser (first) cyclone 50 is closed coupled with riser 40. Transitional member 49 and inlet conduit 52 are both enclosed and completely separate the flowing cracked hydrocarbon vapor from the atmosphere of the reactor vessel. In a closed coupled cyclone separator, all of the reaction mixture from the riser reactor flows directly into the cyclone separator. The hydrocarbon vapors are removed through riser (first) cyclone 50, outlet conduit 70, secondary cyclone 110 and plenum 121 and are transported through a conduit 125 to fractionation and purification means (not shown). Entrained catalyst is separated in riser cyclone 50 and secondary cyclone 110 and falls to a lower portion of the reactor vessel 120 through diplegs 63 and 111. The diplegs are sealed by means, e.g. J-valves, trickle valves, flapper valves (not shown).

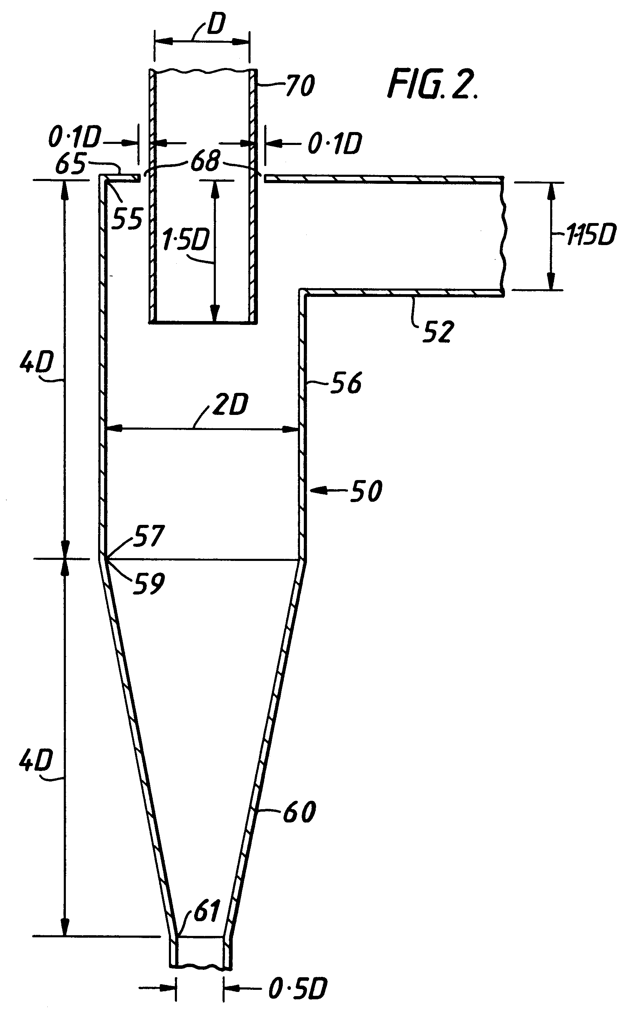

The catalyst flows into the stripping zone 130 containing baffles 135 or other means to contact the catalyst and stripping gas. The stripping gas may be nitrogen, steam or other suitable material delivered by conduit 160 to distributor 161. Distributor 161 uniformly disperses the stripping gas into the stripping zone 130 to remove volatile and volatizable hydrocarbons. Stripped hydrocarbons and stripping gas flow through port 68 in riser cyclone separator 50, seen in Fig. 2 and out reactor vessel 120 with the cracked hydrocarbon product vapors through riser cyclone 50, outlet conduit 70, secondary cyclone separator 110, plenum 121 and conduit 125.

The stripped catalyst leaves stripping zone 130 and is delivered to the regenerator 250 by way of spent catalyst standpipe 165. The regenerator 250 contains a lower dense phase bed of catalyst and an upper dilute phase of catalyst. Catalyst is uniformly distributed across the upper surface of the dense phase bed. Most of the coke is removed in the dense phase bed. A combustion medium of air or oxygen and nitrogen is delivered by conduit 260 to a distribution device 261 to mix combustion medium and coked catalyst. Coke is burned from the catalyst to give a flue gas containing amounts of $CO_2$, $SO_2$, and $NO_x$. The combustion of the coke to $CO_2$ is preferably carried out at a regenerator temperature above about 650°C and below about 760°C in the presence of a combustion promoter such as platinum residing on the catalyst so that 0.1 wt% or less residual carbon is left on the catalyst. The flue gas passes through the regenerator dilute phase, cyclone 225, plenum 226 and flue gas line 227 for further processing. As the flue gas passes through the cyclone, catalyst is separated and returned to the dense bed by way of dipleg 228. The regenerated catalyst flows from the dense bed to standpipe 270. Slide valve 275 regulates the flow of regenerated catalyst from standpipe 270 to riser 40.

Reference is made to Fig. 2, a proportional representation of riser cyclone 50.

The component parts of riser cyclone 50 are proportioned relative to outlet conduit 70 diameter D which is the diameter required to contain the volume of flowing product vapors and stripping gas. In industrial practice this is a 30 cm. 150 cm. diameter conduit. Inlet conduit 52 is attached to transitional member 49 of riser reactor 40 and provides direct fluid communication between the riser reactor 40 and riser cyclone separator 50. Inlet conduit 52 is the structural support for riser cyclone 50 in reactor vessel 120. Inlet conduit 52 has a diameter 1.15D.

Inlet conduit 52 discharges tangentially into barrel 56. Barrel 56 is vertically elongated cylindrical barrel extending a distance 4D from upper end 55 to lower end 57. The barrel 56 has a cylindrical diameter 2D.

A vertically oriented, right cylindrical conical member 60 extends a vertical distance 4D from an upper base end 59 to a truncated apex end 61. Conical member 60 is inverted so that base end 59 is above apex end 61. The upper base end 59 has a diameter 2D to mate with and join barrel lower end 57. Truncated apex end 61 is directly attached to and in fluid communication with dipleg 63 of diameter 0.5D. Dipleg 63 provides for the flow of separated catalyst to stripping zone 130.

Barrel upper end 55 is attached to cover 65 which has an outside diameter 2D, the same as that of barrel 56. A port 68 in cover 65 is axially aligned with barrel 56 and provides for the flow of stripper gas from stripping zone 130 into barrel 56.

Outlet conduit 70 traverses cover 65 through the center of annular port 68 and extends a distance 1.5D below cover 65 into barrel 56. Annular port 68 has an inner diameter larger than the outside diameter of outlet conduit 70, providing an annular gap of 0.1D between the outer diameter of outlet conduit 70 and cover 65.

In a fluid catalytic cracking reactor vessel, the pressure is in the range $3.4 \times 10^4$ to $3.1 \times 10^5$ Pa, $2.4 \times 10^5$ Pa being typical in current practice. The pressure gradient in a closed coupled riser cyclone is reversed from that of an open cyclone. The pressure in a closed coupled cyclone is lower than the reactor vessel. Catalyst in the dipleg provides a seal and virtually no hydrocarbon flows up the dipleg. The pressure inside the closed coupled riser cyclone is typically $7 \times 10^2$ to $14 \times 10^3$ Pa below that of the reactor vessel caused by the lower pressure of the vapor recovery system in flow communication with outlet conduit 70. This $7 \times 10^2$ to $14 \times 10^3$ Pa pressure differential is the motive force which educts stripper gas into the riser (first) cyclone. Stripping gas goes through two stages of cyclone separation on removal from the reactor vessel.

The dimension of the port are calculated from the sharp edge orifice equation.

$$\Delta P_{gap} = \frac{\rho V^2}{2 g_c C^2} \quad \frac{1}{144}$$

$$V = \frac{Q}{A}$$

where:

$\Delta Pgap$     = pressure drop across orifice, psi (1 psi = $6.9 \times 10^3$Pa)

$\rho$     = stripper gas density, 0.1 lb/ft³ (1.6 kg/m³)

V     = gas velocity through port, ft/s (1 ft/s = 0.3 m/s)

$g_c$     = 32.3 ft/s² (0.305 m/s²)

C     = orifice flow coefficient, ≈0.61

Q     = stripper gas flow rate, ft³/s (1 ft³/s = 0.028 m³/s)

A     = port flow area, ft² (1 ft² = 0.093

$m^2$

Case 1: $\Delta Pgap = 6.9 \times 10^2 Pa$ (0.1 psi)

riser cyclone inlet flow = 1.42 $m^3/s$ (50 $ft^3/s$)

@ 530°C, $2.418 \times 10^5 Pa$ (990°F, 35.1 psig)

stripper gas flow = 0.11 $m^3/s$ (4 $ft^3/s$)

@ 530°C, $2.412 \times 10^5 Pa$ (990°F, 35.0 psig)

From the sharp edge orifice equation

A = 63.2 $cm^2$ (0.068 $ft^2$)

@ $\Delta Pgap = 6.9 \times 10^2 Pa$ (0.1 psi)

For a riser inlet flow of 1.42 $m^3/s$ (50 $ft^3/s$) (actual) the typical velocity is about 19.8 m/s (65 ft/s). The required riser outlet area (Ar) is therefore:

$$Ar = \frac{1.42}{19.8} m^2 \quad \left(\frac{50}{65} ft^2\right)$$

From Fig. 2, Dr = 1.15D

Therefore for $\Delta Pgap = 6.9 \times 10^2$ Pa, the port flow area is 0.0918D.

Case 2: $\Delta Pgap = 1.38 \times 10^4$ Pa (2.0 psi)

By the same method,

for $\Delta Pgap = 1.38 \times 10^4$ Pa, the port flow area is $0.0205D^2$.

Synergistically, the port also eliminates the need for expansion joints to accommodate thermal expansion. The riser cyclone and secondary cyclone are not attached, and are separated by a gap of about 0.1D. Thermal growth and contraction of the closed cyclone system has been known to distort expansion joints requiring periodic maintenance. The invention eliminates this type of maintenance.

Thus, having described the apparatus for carrying out the invention, it is understood that no undue restriction be imposed by reason thereof, and that only such limitations be imposed as are contained in the appended claims.

**Claims**

1. A riser cyclone separator (50) for connection to the outlet (49) of a riser (40) for the fluid catalytic cracking of a hydrocarbon feed, said separator being adapted for association with a reactor vessel (120) containing a catalyst stripping zone (130), said separator (50) serving in use to separate cracked hydrocarbon from used catalyst;

said separator (50) comprising :

a cyclone barrel (56) having an inlet duct (52) for tangential entry of the cracked hydrocarbon and used catalyst from the riser outlet (49), an upper outlet tube (70) for the cracked hydrocarbon and a lower outlet (63) for directing the used catalyst to the stripping zone (130) within the reactor vessel; wherein said separator (50) is characterized by having an annular inlet port (68) at its upper end (65), surrounding said outlet tube (70), to allow stripper gas within the reactor vessel (120) to be drawn into said cyclone separator (50).

2. A riser cyclone separator according to Claim 1 characterized by a second cyclone separator (110) adapted for location within said reactor vessel (120), said second cyclone separator being adapted for connection in the cracked hydrocarbon flow path from the upper outlet tube (70) of the first separator (50) and an outlet (125) from said reactor vessel.

3. A riser cyclone separator according to Claim 1 or Claim 2 characterized in that said cyclone barrel (56) comprises a substantially vertical right circular cylindrical barrel (56), a substantially vertical inverted right circular truncated conical member (60) having its upper base end communicating with the lower end of the barrel and having its lower truncated apex end (61) communicating with said lower outlet in the form of a dipleg (63), and a barrel cover (65) at the upper end of said barrel, said upper outlet tube (70) comprising a vertical outlet tube axially aligned with said barrel and extending through said cover (65), and said annular inlet port (68) opening through said cover (65) and surrounding said outlet tube (70).

4. Apparatus for the fluid catalytic cracking of a hydrocarbon feed in a closed cyclone system, said apparatus comprising:

a substantially vertical riser tube (40) defining a conversion zone, and means (20,30,270) for introducing a suspension of hydrocarbon feed and catalyst into the lower, upstream end of said zone to produce a mixture of cracked hydrocarbon and used catalyst flowing from the upper, downstream end of said zone; and

a reactor vessel (120) having a catalyst stripping zone (130) therein and a port (160) for introducing stripping gas into said stripping zone;

characterized by:

a riser cyclone separator (50) according to any one of Claims 1 to 3 and having its inlet duct (52) connected directly to an outlet conduit (49) from the upper, downstream end of said riser tube (40).

5. A process for the fluid catalytic cracking of a hydrocarbon feed comprising:

contacting a hydrocarbon feed with a fluidized cracking catalyst in a riser conversion zone to produce a mixture of cracked hydrocarbon and used catalyst;

discharging said mixture into a cyclone separator disposed within a reactor vessel to separate the cracked hydrocarbon and the used catalyst;

passing said used catalyst to a stripping zone within said reactor vessel and therein contacting the used catalyst with a stripping gas to separate stripped catalyst and spent stripping gas;

withdrawing the stripped catalyst from the reactor vessel; and

passing said cracked hydrocarbon from said cyclone separator to a vapor recovery zone;

characterized in that:

said mixture of cracked hydrocarbon and used catalyst is discharged directly into a said cyclone separator according to any one of claims 1 to 3;

passing said spent stripping gas directly into said cyclone separator for passage with said cracked hydrocarbon to said vapor recovery zone; and

maintaining the vapor recovery zone pressure below the pressure in the cyclone separator and the cyclone separator pressure below the pressure in the reactor vessel.

6. A processing according to claim 5 characterized by maintaining the reactor vessel pressure in the range of from $3.4 \times 10^4$ to $3.1 \times 10^5$ Pa.

7. A process according to claim 5 or claim 6 characterized by maintaining the cyclone separator pressure $7 \times 10^2$ to $14 \times 10^3$ Pa below the reactor vessel pressure due to the lower pressure of the vapor recovery zone.

**Patentansprüche**

1. Ein Steigrohrzyklonabscheider (50) zum Anschluß an den Auslaß (49) eines Steigrohrs (40) für das katalytische Wirbelschichtkracken einer Kohlenwasserstoffcharge, wobei besagter Abscheider ausgelegt ist zur Verbindung mit einem Reaktorgefäß (120), das eine Katalysator-Stripping-Zone (130) enthält, wobei besagter Abscheider (50) im Gebrauch dazu dient, gekrackten Kohlenwasserstoff von verbrauchtem Katalysator zu trennen; wobei besagter Abscheider (50) umfaßt:

eine Zyklontrommel (56) mit einem Einlaßrohr (52) zum tangentialen Eintritt des gekrackten Kohlenwasserstoffes und verbrauchten Katalysators aus dem Steigrohrauslaß (49), einem oberen Auslaßrohr (70) für den gekrackten Kohlenwasserstoff und einen unteren Auslaß (63) zum Leiten des verbrauchten Katalysators zur Stripping-Zone (130) im Reaktorgefäß; wobei besagter Abscheider (50) dadurch gekennzeichnet ist, daß er eine ringförmige Einlaßöffnung (68) an seinem oberen Ende (65) aufweist, die besagtes Auslaßrohr (70) umgibt, um es zu ermöglichen, daß Stripping-Gas im Reaktorgefäß (120) in besagten Zyklonabscheider (50) gezogen wird.

2. Ein Steigrohrzyklonabscheider nach Anspruch 1, gekennzeichnet durch einen zweiten Zyklonabscheider (110), der zur Anordnung in besagten Reaktorgefäß (120) ausgelegt ist, wobei besagter zweiter Zyklonabscheider zum Anschluß im Durchflußweg des gekrackten Kohlenwasserstoffes vom oberen Auslaßrohr (70) des ersten Abscheiders (50) und einem Auslaß (125) aus besagtem Reaktorgefäß heraus ausgelegt ist.

3. Ein Steigrohrzyklonabscheider nach Anspruch 1 oder Anspruch 2, dadurch gekennzeichnet, daß besagte Zyklontrommel (56) eine im wesentlichen vertikale gerade kreisförmige zylindrische Trommel (56), ein im wesentlichen vertikales umgedrehtes gerades kreisförmiges kegelstumpfartiges Teil (60), wobei dessen oberes Basisende mit dem unteren Ende der Trommel in Verbindung steht und dessen unteres stumpfes Scheitelende (61) mit besagtem unteren Auslaß in der Form eines Tauchrohres (63) in Verbindung steht, und eine Trommelabdeckung (65) am oberen Ende besagter Trommel umfaßt, wobei besagtes oberes Auslaßrohr (70) ein vertikales Auslaßrohr umfaßt, das axial mit besagter Trommel fluchtet und sich durch besagte Abdeckung (65) hindurch erstreckt, und besagte ringförmige Einlaßöffnung (68) sich durch besagte Abdeckung (65) hindurch öffnet und besagtes Auslaßrohr (70) umgibt.

4. Vorrichtung zum katalytischen Wirbelschichtkracken einer Kohlenwasserstoffcharge in einem geschlossenen Zyklonsystem, wobei besagte Vorrichtung umfaßt:

ein im wesentlichen vertikales Steigrohr (40), das eine Umwandlungszone definiert, und Mittel (20, 30, 270) zur Einführung einer Suspension aus Kohlenwasserstoffcharge und Katalysator in das untere, stromaufwärtige Ende besagter Zone, um eine Mischung aus gekracktem Kohlenwasserstoff und verbrauchtem Katalysator zu produzieren, die vom oberen, stromabwärtigen Ende besagter Zone abströmt; und einem Reaktorgefäß (120) mit einer Katalysator-Stripping-Zone (130) darin und einer Öffnung (160) zur Einführung von Stripping-Gas in besagte Stripping-Zone;

gekennzeichnet durch:

einen Steigrohrzyklonabscheider (50) nach einem der Ansprüche 1 bis 3, wobei dessen Einlaßrohr (52) direkt an ein Auslaßrohr (49) vom oberen, stromabwärtigen Ende besagten Steigrohres (40) angeschlossen ist.

5. Ein Verfahren zum katalytischen Wirbelschichtkracken einer Kohlenwasserstoffcharge, welches umfaßt:

In-Kontakt-Bringen einer Kohlenwasserstoffcharge mit einem fluidisierten Krack-Katalysator in einer Steigrohrumwandlungszone, um eine Mischung aus gekracktem Kohlenwasserstoff und verbrauchten Katalysator zu produzieren;

Abgeben besagter Mischung in einen Zyklonabscheider, der in einem Reaktorgefäß angeordnet ist, um den gekrackten Kohlenwasserstoff und den verbrauchten Katalysator zu trennen;

Leiten besagten verbrauchten Katalysators zu einer Stripping-Zone in besagten Reaktorgefäß und darin In-Kontakt-Bringen des verbrauchten Katalysators mit einem Stripping-Gas, um gestrippten Katalysator und verbrauchtes Stripping-Gas zu trennen;

Abziehen des gestrippten Katalysators aus dem Reaktorgefäß; und

Leiten besagten gekrackten Kohlenwasserstoffes aus besagtem Zyklonabscheider zu einer Dampfrückgewinnungszone;

dadurch gekennzeichnet, daß:

besagte Mischung aus gekracktem Kohlenwasserstoff und verbrauchten Katalysator direkt in einen besagten Zyklonabscheider nach einen der Ansprüche 1 bis 3 abgegeben wird;

besagtes verbrauchtes Stripping-Gas direkt in besagten Zyklonabscheider zum Durchgang mit besagten gekrackten Kohlenwasserstoff zu besagter Dampfrückgewinnungszone geleitet wird; und

der Druck in besagter Dampfrückgewinnungszone unterhalb des Druckes in Zyklonabscheider und der Druck in Zyklonabscheider unterhalb des Druckes in Reaktorgefäß gehalten wird.

6. Ein Verfahren nach Anspruch 5, dadurch gekennzeichnet, daß der Druck in Reaktorgefäß in Bereich von $3,4 \times 10^4$ bis $3,1 \times 10^5$ Pa gehalten wird.

7. Ein Verfahren nach Anspruch 5 oder Anspruch 6, dadurch gekennzeichnet, daß der Druck in Zyklonabscheider $7 \times 10^2$ bis $14 \times 10^3$ Pa unterhalb des Druckes in Reaktorgefäß gehalten wird, aufgrund des niedrigeren Druckes der Dampfrückgewinnungszone.

## Revendications

1. Séparateur cyclone pour colonne montante (50) destiné à être raccordé à l'orifice de sortie (49) d'une colonne montante (40) pour le craquage catalytique fluide d'un chargement d'hydrocarbure, ledit séparateur étant conçu pour être associé à un récipient réactionnel (120) contenant une zone d'extraction de catalyseur (130), ledit séparateur (50) étant utilisé pour séparer un hydrocarbure de craquage d'un catalyseur épuisé;

ledit séparateur (50) comprenant:

un tambour de cyclone (56) ayant un conduit d'entrée (52) pour la pénétration tangentielle de l'hydrocarbure de craquage et du catalyseur épuisé provenant de la sortie (49) de la colonne montante, un tube de sortie supérieur (70) pour l'hydrocarbure de craquage et un orifice de sortie inférieur (63) pour diriger le catalyseur épuisé vers la zone d'extraction (130) dans le récipient réactionnel; dans lequel ledit séparateur (50) est caractérisé par le fait qu'il a un orifice d'entrée annulaire (68) à son extrémité supérieure (65), entourant ledit tube de sortie (70), pour permettre au gaz d'extraction d'être aspiré dans ledit séparateur cyclone (50).

2. Séparateur cyclone pour colonne montante selon la revendication 1, caractérisé par un second séparateur cyclone (110) conçu pour être positionné à l'intérieur dudit récipient réactionnel (120), ledit second séparateur cyclone étant conçu pour être raccordé au trajet d'écoulement de l'hydrocarbure de craquage provenant du tube de sortie supérieur (70) du premier séparateur (50) et à une sortie (125) dudit récipient réactionnel.

3. Séparateur cyclone pour colonne montante selon la revendication 1 ou la revendication 2, caractérisé en ce que ledit tambour de cyclone (56) comprend un tambour cylindrique circulaire droit sensiblement vertical (56), un élément (60) tronconique circulaire droit inversé sensiblement vertical ayant son extrémité de base supérieure en communication avec l'extrémité inférieure du tambour et ayant son extrémité d'apex tronquée inférieure (61) en communication avec ladite sortie inférieure sous la forme d'un tube plongeant (63), et un couvercle de tambour (65) à l'extrémité supérieure dudit tambour, ledit tube de sortie supérieur (70) comprenant un tube de sortie vertical aligné axialement avec ledit tambour et traversant ledit couvercle (65), et ledit orifice d'entrée annulaire (68) s'ouvrant à travers ledit couvercle (65) et entourant ledit tube de sortie (70).

4. Appareil pour le craquage catalytique fluide d'un chargement d'hydrocarbure dans un système à cyclone fermé, ledit appareil comprenant:

un tube montant sensiblement vertical (40) définissant une zone de conversion, et des moyens (20, 30, 270) pour introduire une suspension d'un chargement d'hydrocarbure et d'un catalyseur dans l'extrémité inférieure amont de ladite zone afin de produire un mélange d'hydrocarbure de craquage et de catalyseur épuisé s'écoulant depuis l'extrémité aval supérieure de ladite zone; et

un récipient réactionnel (120) contenant une zone d'extraction de catalyseur (130) et ayant un orifice (160) pour introduire un gaz d'extraction dans ladite zone d'extraction;

caractérisé par:

un séparateur cyclone pour colonne montante (50) selon l'une quelconque des revendications 1 à 3 et ayant son conduit d'entrée (52) directement relié à un conduit de sortie (49) de l'extrémité aval supérieure dudit tube montant (40).

5. Procédé pour le craquage catalytique fluide d'un chargement d'hydrocarbure comprenant:

la mise en contact d'un chargement d'hydrocarbure avec un catalyseur de craquage fluidisé dans une zone de conversion à colonne montante pour produire un mélange d'hydrocarbure de craquage et de catalyseur épuisé;

le déchargement de ce mélange dans un séparateur cyclone disposé à l'intérieur d'un récipient réactionnel pour séparer l'hydrocarbure de craquage du catalyseur épuisé;

le passage dudit catalyseur épuisé vers une zone d'extraction dans ledit récipient réactionnel et la mise en contact dans celui-ci du catalyseur épuisé avec un gaz d'extraction pour séparer le catalyseur extrait et le gaz d'extraction épuisé;

le retrait du catalyseur extrait du récipient réactionnel; et

le passage dudit hydrocarbure de craquage dudit séparateur cyclone vers une zone de récupération de vapeur;

caractérisé en ce que:

ledit mélange d'hydrocarbure de craquage et de catalyseur épuisé est directement déchargé dans un séparateur cyclone selon l'une quelconque des revendications 1 à 3;

le passage dudit gaz d'extraction épuisé directement dans ledit séparateur cyclone pour passer avec ledit hydrocarbure de craquage vers ladite zone de récupération de vapeur; et

le maintien de la pression de la zone de récupération de vapeur en dessous de la pression dans le séparateur cyclone et de la pression du séparateur cyclone sous la pression dans le récipient réactionnel.

6. Procédé selon la revendication 5, caractérisé par le maintien de la pression du récipient réactionnel dans l'intervalle de $3,4 \times 10^4$ à $3,1 \times 10^5$ Pa.

7. Procédé selon la revendication 5 ou la revendication 6, caractérisé par le maintien de la pression du séparateur cyclone à une pression inférieure de $7 \times 10^2$ à $14 \times 10^3$ Pa à la pression du récipient réactionnel du fait de la plus faible pression de la zone de récupération de vapeur.

FIG.1.

FIG.2.